# EUROPEAN PATENT APPLICATION

(11) **EP 3 064 059 A1**
(43) Date of publication of application: **07.09.2016**
(21) Application number: 15157407.6
(22) Date of filing: 03.03.2015
(51) Int. Cl.: A01K 5/02

(54) **Motorized feed vehicle for feeding fur animals**

(71) Applicant: Hedensted Gruppen A/S, 8722 Hedensted (DK)
(72) Inventor: Madsen, Jens Jørgen, 5220 Odense SØ (DK); Lange, Kent, 8763 Rask Mølle (DK); Christiansen, Kim, DK-5464 Brenderup (DK)
(74) Representative: COPA Copenhagen Patents

(57) **Abstract**

A motorized feed vehicle (1) for feeding fur minks raised in cages (3) having wire mesh top walls (4) and being arranged in longitudinal rows in farms, said vehicle (1) having a feed container (8) with an inner space for storing pasty mink feed, and at least two feed discharge devices (12.1, 12.2) for discharging feed on the top wall of cages and a control unit comprising a database for storing data about the amount of feed to be delivered to each cage in a delivering period and for controlling the amount of feed each of the feed discharge devices is to deliver to the cages in accordance with the stored data.

Each feed discharge device (12.1; 12.2) comprises a dosing pump (13.1; 13.2) being upstream connected to an inner space of the feed container (8) and downstream connected with a spout (15.1; 15.2) with an outlet opening (16.1; 16.2) via a tubing, each of the pumps (13.1; 13.2) being individually controllable to pump and deliver a predetermined amount of feed to each of the cages through the respective spout outlet openings.

## Description

### FIELD OF INVENTION

The present invention relates to a motorized feed vehicle for feeding fur animals, especially minks, raised in cages having wire mesh top walls and being arranged in longitudinal rows, said vehicle having a longitudinal axis and comprising a frame supported by wheels and carrying a feed container with an inner space for storing feed, especially pasty mink feed, and a feed discharge device for discharging feed on a wire mesh top wall of cages when operated and activated, and a control unit for controlling the activation of the feed discharge device, the feed discharge device comprising pumping means being upstream connected to the inner space of the feed container and downstream connected to an upstream/proximal end of a tubing through which a feed portion is delivered.

### BACKGROUND OF THE INVENTION

The above type of feed vehicle is widely used in mink farms today. Known feed vehicles are provided with a feed discharge device having a single spout for discharging a feed portion on the top wall of wire mesh cages arranged in a longitudinal row. The feed product or feed substance is pasty with a consistence allowing it to be supported by the wire mesh without portions thereof substantially dripping through the meshes. The majority of feed vehicles are manned vehicles controlled by an operator. The operator sits on the vehicle and drives the vehicle along the row of cages steering with one hand. In the other hand, he holds the spout of the feed discharge device. He manually activates the feed discharge device to discharge a feed portion by depressing a foot pedal or a finger button arranged adjacent the spout, the size of the food portion discharged on a cage being determined by the period of time the pedal is depressed.

In the period where the minks have puppies, a feed portion is delivered both to the top wall or roof of the nest box and the main box of the cages.

Other manned feed vehicles are provided with a computer in which the sizes of the feed portions to be discharged to the individual cages in a row of cages are stored. Additionally, the alternating periods of pumping feed portions and not pumping feed portions are stored in the computer. The task of the operator is to manually control the speed of the vehicle and move the spout between the cages in accordance with the movement of the vehicle. It is further known that after the relevant feed sequence stored in the control unit has been chosen, e.g. by scanning a bar code, the sequence of delivering feed to the cages can be started by depressing a foot pedal or a finger button arranged in the vehicle or adjacent the spout, interrupted by releasing the pedal or button and resumed by again depressing the pedal or button. Thereby, it is possible to stop and resume the feeding sequence at any point of the sequence e.g. for removing a dead animal from a cage or when driving from one row of cages to another.

Further unmanned, i.e. automatic, feed vehicles are known that are able to automatically drive along a row of cages and deliver the correct feed portion to each case. Such vehicles are disclosed in Danish patent applications PA 1987 03916, DK 176402B1 and DK 177406.

Finally, WO 2008/1016500 A1 discloses a feed vehicle comprising two feed discharge devices each having a single spout and being arranged for discharging feed portions to the respective cages of mutually spaced and parallel rows of cages, when the vehicle drives in the aisle between the rows of cages.

Feeding of the minks is especially labour demanding when using vehicles manually controlled by an operator, as the animals, most of the year, have to be fed two times a day. It is assumed that time spent feeding each female mink is about 16 minutes a year and that about 73% of the time is used to feed the animals by pumping the pasty feed portions out of the spout and about 27 % of the time is spent on transportation for filling the feed container and driving to and from the feed stock and between the different rows of cages.

### SUMMARY OF THE INVENTION

It is the object of the present invention to provide a feed vehicle allowing for a reduction of the time used for feeding fur animals in a farm, especially minks in a mink farm.

An additional object of the present invention is to provide a feed vehicle allowing for the simultaneous discharge of feed portions of the same or different size to a number of cages, i.e. at least two cages, in such a way that the pumps of the feed discharge devices do not get out of sync and one of the pumps delivers feed during a period of time where the spout of the feed discharge device is moved from one cage to another and feed thereby deliver to a wrong cage.

A further object of the present invention is to provide a feed vehicle discharging very accurate feed portions to the cages.

The present invention provides a motorized feed vehicle for feeding fur animals, especially minks, raised in cages having wire mesh top walls and being arranged in longitudinal rows in farms, said vehicle having a longitudinal axis and comprising a frame supported by wheels and carrying a feed container with at least one inner space for storing feed, especially pasty mink feed, and at least two feed discharge devices for discharging feed on preferably a wire mesh top wall of cages and a control unit comprising a database for storing data about the amount of feed to be delivered to each cage in a delivering period and for controlling the amount of feed each of the feed discharge devices is to deliver to the cages in accordance with the stored data, each feed discharge device comprising a dosing pump being upstream connected to an inner space of the feed container and downstream connected to an upstream/proximal end of a tubing being at a distal end thereof provided with a spout having an outlet opening, each of the pumps being individually controllable to pump and deliver a predetermined amount of feed to each of the cages through the respective spout outlet openings.

It should be noted that the control unit and the database can be considered as or be comparable to or equivalent to a processor and a storage unit, i.e. a computer.

A first pump supplies feed product to a first spout through a first tubing, a second pump supplies feed product to a second spout through a second tubing and so on. Thereby, it is for example possible to deliver different feed products to the different spouts, e.g. a first feed product to a first spout and a second feed product to a second spout. This possibility is an advantage when there are grown-up minks as well as puppies in the cages, as puppies prefer a different feed product than the grown-up minks. In this case, the feet container can be divided into sections containing the relevant feed products. Alternatively, the feed discharge device can be provided with water supply means for supplying water to the feed portion delivered to the top wall of the nest box of the cage. Additionally, the feed vehicle of the present invention allows for the discharge of different sizes of feed portions from the two spouts.

By simultaneously discharging a feed portion on the top wall of each of two or more adjacent cages in the same row or on the top wall of cages in two parallel rows, it is believed that the time spent feeding the animals in a farm can be reduced by approximately 40%. Such a reduction is extremely relevant when feeding the animals by using manned vehicles, but also relevant when feeding the animals by using an unmanned vehicle.

Additionally, by means of the individually controllable pumps, it is possible to deliver feed portions of predetermined and very accurate sizes to the cages and coordinate the delivering of the feed portions to the cages in a sequence where it is secured that the feed portions are delivered to the correct cages in the correct sizes and it is prevented that feed portions or parts of feed portions are delivered to wrong cages. Without individually controllable dosing pumps controlled by the control unit, a pump of one of the feed discharge devices will eventually get out of sync with the pump of another feed discharge device and pump and deliver feed through the spout outlet opening during a period of time where the spout is moved from one cage to another and feed is thereby delivered to a wrong place.

In a preferred embodiment, data about a pause/non-delivering period between delivering periods is stored in the database of the control unit. In said pause, none of the pumps are running and no feed is delivered through the spout outlet openings, and each of the pumps are individually controllable to provide the pause/non-delivering and non-pumping periods between delivering feed to respective cages or sections of a single cage.

In an additionally preferred embodiment, detection means are associated with each pump, said detection means being configured to provide the control unit with information of whether or not the pump is running. Thereby, the control unit is advantageously provided with information about the operation state of each pump and can perform corrections if necessary.

In a further preferred embodiment of the invention, the starting time of a pause is defined when the control unit from each detection means has received information that the respective pump is no longer running. When the control unit has received information that none of the pumps are running and a pause period of time according to the data stored in the database of the control unit has elapsed, the control unit will re-activate the pumps in accordance with the data stored in the database of the control unit. This sequence continues until feed portions have been delivered to the desired cages. Additionally, knowledge of the starting time of the pause is important to avoid that a pump gets out of sync due to a difference in the efficiency of the pumps. The dosing pumps can so to say be born with different efficiency and one pump can be worn to a greater extent than another pump during use. Repair or exchange of a pump will undoubtedly also result in a chance of efficiency.

Although the start time of the pump of the respective feed discharge device can be stored in the database of the control unit, the starting time of the pumping and feed delivering of the pump of the respective feed discharge device can also or additionally be determined by a tag or proximity sensor, e.g. based on RFID, NFC, Bluetooth or a barcode or QR code and reader..

In a further embodiment according to the invention, the dosing pumps of the feed discharge devices are positive displacement pumps, especially rotary positive displacement pumps, such as hose pumps or gear pumps, especially gear pumps. Positive displacement pumps are preferred as they allow for delivering accurate doses of the feed product.

According to an additional embodiment of the invention, the detection means is a rotary encoder, also called a shaft encoder associated with a shaft of the respective pump.

By means of an encoder associated with the shaft of an rotary positive displacement pump, the amount of feed delivered can be determined by means of the number of rotations or the degree of rotation of the shaft. When using a gear pump, the amount of feed delivered is determined by the number of rotations or degree of rotations of the gear wheels of the gear pump and accordingly the number of teeth meshed during the rotation, thereby allowing for a very high accuracy of the dose of feed delivered. At present, the gear pump is the preferred dosing pump for the feed discharge devices.

The pumps of the feed discharge devices can be operated at constant speed, whereby the amount of feed delivered is essentially determined by the running time of the pump. However, by means of a shaft encoder the amount of feed delivered can be determined independently of the rotational speed of the pump shaft as the dosage delivered is determined by the number of rotations or degree of rotation.

According to an embodiment of the invention, the control unit is configured to control at least one of the pumps to deliver preselected different amounts of feed to the cages. Thereby, feed portions can be delivered to the cages in accordance with the need of the fur animals in the cages and the growth of the animals thereby optimized.

It should, however, be noted that the control unit can also be configured to control at least one of the pumps to deliver the same amount of feed to each cage.

According to a further embodiment of the invention, the tubing of a first discharge device is configured moveably to arrange the spout opening at positions spaced outwardly from a first lateral side of the vehicle in order to deliver through the spout opening feed portions to cages arranged in a first longitudinally extending row of cages arranged on a first lateral side of the vehicle and the tubing of a second discharge device is configured moveably to arrange the spout opening at positions spaced outwardly from a second lateral side of the vehicle opposite said first lateral side of the vehicle in order to deliver through the spout opening feed portions to cages arranged in a second longitudinally extending row of cages arranged on a second lateral side of the vehicle opposite said first side. This embodiment allows advantageously for delivering feed portions to the cages in two parallel rows of cages and feed portions can simultaneously be delivered to one or more cages in each row whereby a very effective feeding is obtainable.

According to an alternative embodiment of the invention, the tubing of both the first and second feed discharge device are configured movably to arrange the spout opening of the respective spouts at positions spaced outwardly from a first lateral side of the vehicle in order to deliver, through the first and second spout opening respectively, feed portions to two longitudinally adjacent cages in a single row of cages or to two cage sections or points of a single cage in a single row of cages. This embodiment allows only for delivering feed portions to the cages of a single row of cages. It is, however, possible to simultaneously deliver feed portions to two or more cages in the row.

The tubing of the feed discharge devices are preferably formed of flexible tubes to allow bending thereof as desired for operating the feed discharge devices. It should, however, be noted that the tubing can also be formed of mutually articulated rigid tubes or a combination of rigid and flexible tubes.

In an additional embodiment of the invention, the tubing of at least one feed discharge device, preferable the tubing of at least two feed discharge devices, is connected to a robot arm allowing the spout and the opening thereof to be moved to positions where a feed portion is to be delivered, the movement of the robot arm being controlled by the control unit in accordance with data stored in the database thereof. This embodiment is especially useful for a manned feed vehicle where the operator only has to control the speed of and steering the vehicle.

However, the movement, i.e. the speed and steering, of the vehicle can also be controlled by the control unit in accordance with information stored in the database thereof and controlled by signals such as GPS-signals. Accordingly, the feed vehicle can be an unmanned automatic feed vehicle.

According to an embodiment of the invention, the vehicle is a manned vehicle to be manned with an operator manually handling the tubing and the spout of at least one of the feed discharge devices, preferably two feed discharge devices, and optionally also controlling the speed of the vehicle. The task of the operator is to move and position the spouts over the relevant cages, the correct sizes of the feed portions being controlled by the control unit. Additionally, the movement i.e. the speed of the feed vehicle and/or the steering of the vehicle along the row of cages can also be controlled by the control unit of the feed vehicle.

When feeding with a manned vehicle, the operator chooses the relevant feed sequence stored in the control unit, e.g. by scanning a bar code arranged at the entrance of the mink shed or a section thereof. To start the feed sequence, the operator depresses a foot pedal or a finger button arranged in the vehicle or adjacent the spout. By releasing the pedal or button, the feed sequence is interrupted and can be resumed by again depressing the pedal or button. Thereb, it is possible to stop and resume the feeding sequence at any point of the sequence e.g. for removing a dead animal from a cage or when driving from one row of cages to another.

As the pumps of the feed discharge devices are individually controllable, the control unit can be configured to allow the operator to manually prevent or reduce delivery of feed to a cage before the stored amount of feed has been delivered to a cage.

Preventing delivery of feed or delivering of a reduced amount of feed can be relevant if no or a dead animal is present in a cage or the animals have not eaten the feed previously delivered.

Further the control unit can be configured to allow a selected reduction of the amount of feed to be delivered to the cages compared to that stored in the control unit. As an example, a preselected amount of feed delivered daily to each cage can be delivered in a first feeding in the morning and a second feeding in the afternoon. In the morning, a first preselected amount is delivered to each cage and in the afternoon, a second preselected amount of feed is delivered to each cage, the second preselected amount being a percentage of the first preselected amount or of the total daily amount. The first amount can as an example be 66% of the daily amount and the second amount 33% of the daily amount i.e. 50% of the first amount. Additionally, the operator of the manned vehicle can as described above manually reduce the amount of feed delivered to the respective cages during the feed sequence.

The present invention further relates to an arrangement comprising a fur animal farm, especially a mink farm, with at least two parallel rows of cages separated by a driving isle and a motorized feed vehicle according to the invention being configured to drive on the aisle along the rows of cages.

Additionally, the present invention relates to a method of feeding - by means of a feed vehicle according to the invention - fur animals, especially minks, raised in cages having a wire mesh top wall and being arranged in at least one longitudinal row in a farm, the method comprising:
- moving the feed vehicle along the at least one longitudinal row of cages
- essentially simultaneously discharging a feed portion through the spout outlet opening of a first feed discharge device to a spot of a top wall of a first cage and discharging a feed portion through the spout outlet opening of a second feed discharge device to a spot of a top wall of a second cage or a top wall of a nest box of the first cage until at least one feed portion has been discharged to the desired cages of the row of cages.

In an embodiment of the above method according to the invention, the feed vehicle is a vehicle to be manned with an operator, wherein and where
- the operator handles the spouts of a first and second feed discharge device by holding the spouts by one arm and moving them to position the outlet openings thereof close to the spots of the top wall or top walls where the feed portions are to be delivered, and
- the operator controls the speed of the vehicle and the pumps of the feed discharge devices are automatically activated by the control unit to deliver through the spout outlet openings thereof feed portions to the cages in accordance with the data stored in the database of the control unit.

Additionally, the present invention provides a method of feeding fur animals, especially minks, raised in cages having a wire mesh top wall an being arranged in at least one longitudinal row in a farm, from a feeding vehicle, which is adapted to substantially simultaneously discharge feed portions to a set of cages comprising at least a first cage and a second cage via a plurality of spout outlets and comprising at least a first spout outlet and a second spout outlet, wherein the method comprises the steps of:
a) moving the feed vehicle along the at least one longitudinal row to a first set of cages
b) individually setting an amount of feed to be supplied to the individual cages of the first set of cages via individual spout outlets of the plurality of spout outlets,
c) substantially simultaneously supplying feed portions to the cages of the first set of cages,
d) repeating steps a)-c) for additional sets of cages until a desired number of cages have been supplied with feed.

Accordingly, it is seen that the invention relates to being able to individually control the amount of feed which is supplied from the plurality of spout outlets. Further, it is clear that the supplied amounts in general may be different.

The individual settings are automatically set via a database comprising data about the amount of feed to be delivered to each cage.

The database can comprise information about the order of the cages and the amount of feed to be delivered to each case.

The information about the first cage to be supplied with feed is input into a control unit for controlling the method.

Accordingly a control unit, such as a micro-computer, may have this information input in order to ensure that the feed is supplied in the right order. This further makes it possible to pause the feeding process and continue it at an arbitrary cage of the at least one longitudinal row of cages.

Finally, the present invention relates to the use of a feed vehicle according to the invention to feed fur animals, especially minks, raised in cages arranged in longitudinal rows.

### BRIEF DESCRIBTION OF THE FIGURES

An embodiment of the invention is described in more details in the following with regard to the accompanying figures. The figures show one way of implementing the present invention and are not to be construed as being limiting for other possible embodiments falling within the scope of protection of the attached claim set.
Fig. 1 is a perspective view of a feed vehicle according to the invention moving along a row of wire mesh cages and discharging a feed portion on the top wall of each of two adjacent cages in the row of cages,
Fig. 2 is a front view of the feed vehicle,
Fig. 3 is a side view of the feed vehicle,
Fig. 4 is a top view of the vehicle,
Fig. 5 is an enlarged perspective view of a feed discharge device of the feed vehicle, seen detached from the feed vehicle.
Fig. 6 is an illustration of three different modes of operating and controlling the operation of the dosing pumps in a vehicle according to the invention in such a way that the pumps do not get out of sync and deliver feed at wrong points of time.

### DETAILED DESCRIPTION OF THE INVENTION

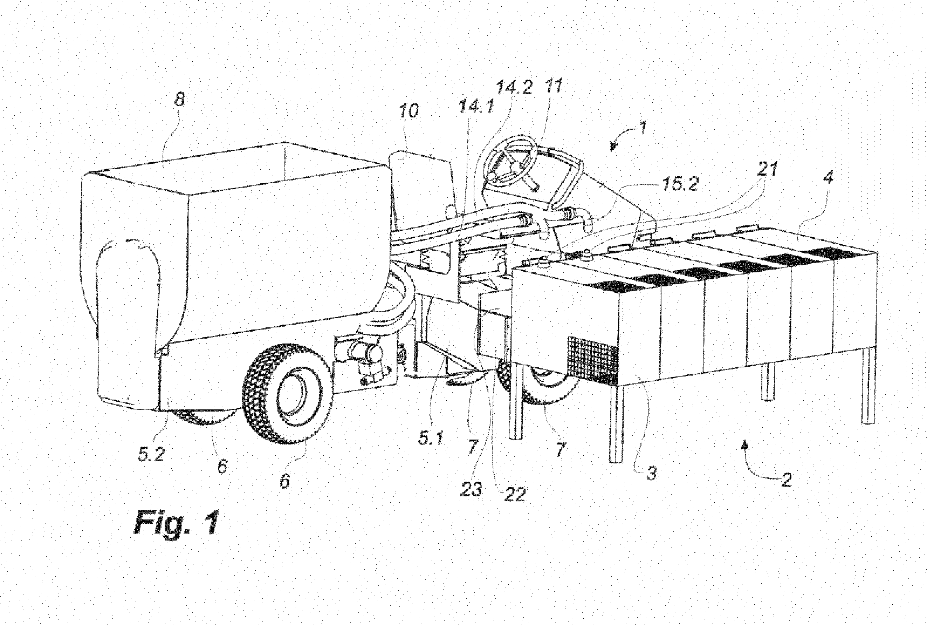

Fig. 1 discloses the motorized feed vehicle 1 according to the invention moving along a row 2 of wire mesh cages 3 in which minks are raised, only a minor portion of the row of cages being shown. The cages comprise a nest box 22 for puppies and a main box for grown-up minks. Additionally, it should be noted that the walls of the cages 3, especially the top wall 4 of the main box and the top wall 23 of the nest box 22, are made of wire mesh. However, only a portion of the walls, including the top, is shown as a wire mesh wall.

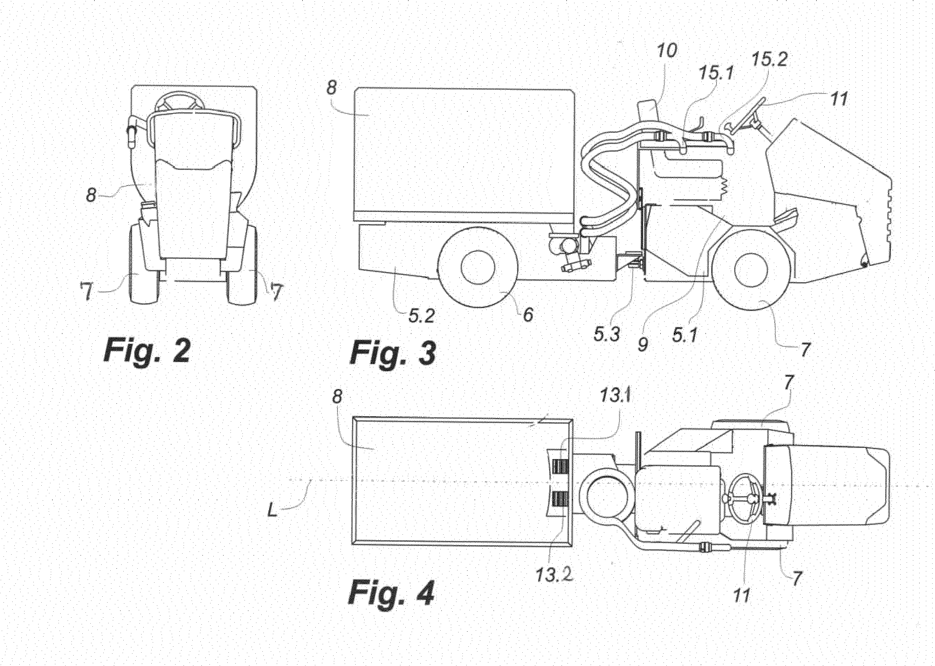

As seen in Figs. 1 to 4, the feed vehicle 1 has a longitudinal axis L, see Fig. 4, and comprises a frame 5 supported by two pairs of wheels 6,6; 7,7 of which all or only one pair of wheels can be drive wheels. A feed container 8 and an operator or driver compartment 9 are arranged on the frame 5. The frame 5 comprises a front frame 5.1 and a rear frame 5.2 being mutually connected by means of a pivot point 5.3. The feed container is arranged on the rear frame and contains a pasty feed product to be delivered to the minks. The operator compartment 9 is arranged on the front frame 5.1 and contains, *inter alia,* a seat 10 for the operator and a steering wheel 11.

Additionally, the feed vehicle 1 comprises two feed discharge devices, a first feed discharge device 12.1 and a second feed discharge device 12.2, for discharging feed when operated and a not shown control unit for activating and or controlling the discharge of feed. The control unit comprises a database in which data is stored about the amount of feed to be delivered to the different cages and the pauses in discharging feed when the spouts of the feed discharge devices are to be moved between the different cages. Depending on whether the feed vehicle is a manned or an unmanned vehicle, the speed and the steering of the vehicle as well as information of the handling of the spouts of the feed discharge devices can be stored in the database. The control unit controls the vehicle according to the relevant data and information.

The first feed discharge device 12.1 comprises a first dosing pump 13.1 being upstream connected to the inner space of the feed container 8 containing the feed product, and downstream connected to a first tubing 14.1. The first pump 13.1 is operable to pump feed from the feed container 8 to the first tubing 14.1 and the tubing is at its downstream end provided with a first spout 15.1 with a first outlet opening 16.1. Correspondently, the second feed discharge device 12.2 comprises a second dosing pump 13.2 being upstream connected to the inner space of the feed container 8 containing the feed product, and downstream connected to a second tubing 14.2. The second pump 13.2 is operable to pump feed from the feed container 8 to the second tubing 14.2 and the tubing is at its downstream end provided with a second spout 15.2 with a second outlet opening 16.2. The pumps 13.1 and 13.2 are each driven by a motor and are individually controllable by the control unit to pump and deliver a predetermined amount of feed product to the respective of two adjacent cages through the respective spout outlet opening 16.1, 16.2.

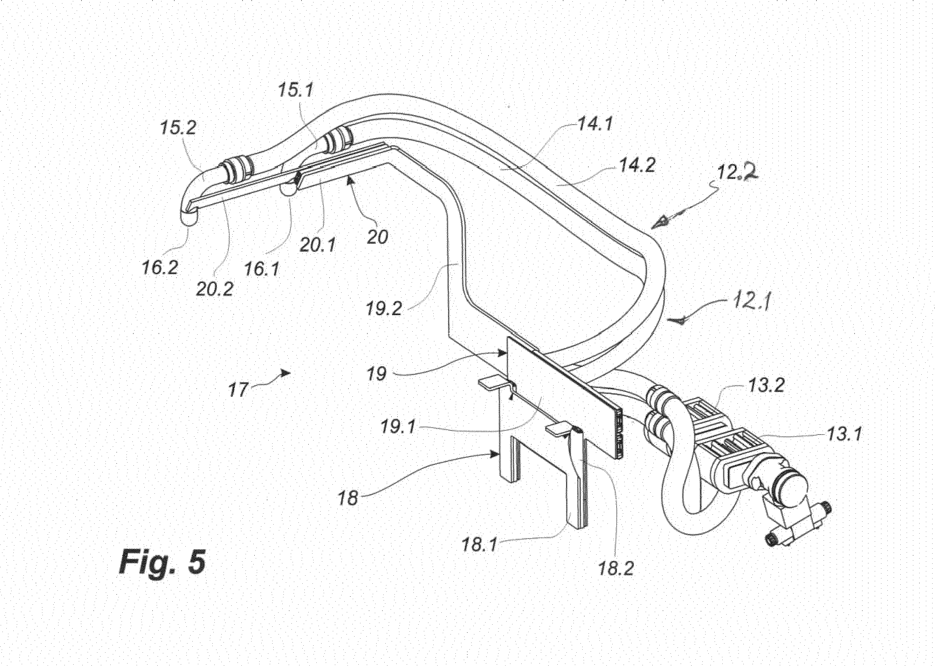

As seen most clearly in Figs. 3 and 5, the spouts 15.1 and 15.2 are, in the embodiment shown, connected to a system of arms or links 17. The arm system 17 shown comprises an upwardly extending first telescopic arm 18 having a stationary arm part 18.1 fixed to the rear portion of the front frame 5.1 and an extendable arm part 18.2. A stationary arm part 19.1 of a second telescopic arm 19 is fixed to the upper end of the extendable arm part 18.2 of the first telescopic arm 18. The second telescopic arm 19 extends laterally and is provided with an extendable arm part 19.2. A stationary arm part 20.1 of a third telescopic arm 20 is fixed to the outer end of the extendable arm part 19.2 of the second telescopic arm 19. The third telescopic arm 20 extends longitudinally and is provided with an extendable arm part 20.2. The first spout 15.1 and the second spout are connected to the extendable arm part 20.2 of the third telescopic arm 20 of the arm system 17.

The spouts 15.1 and 15.2 are arranged in line and are longitudinally spaced in a horizontal plane and their outlet openings 16.1 and 16.2 are also arranged in a common horizontal plane and are longitudinally spaced and arranged in line. The outlet openings are directed downwards. The arm system 17 allows for upwardly and downwardly moving and positioning the spouts, for laterally outwardly and inwardly moving and positioning the spouts and for longitudinally forwardly and backwardly moving the spouts.

As mentioned above, the control unit of the feed comprises a database, in which data is stored about the feed sequence of the row of cages in question, i.e. the amount of feed to be delivered to each case by the respective feed discharge device as well as data about the pause/non-delivering period between delivering food portions to two adjacent cages and in which pause the spouts of the respective feed discharging devices are moved to new cages. The control unit controls the above feed sequence when activated.

When feeding the minks in the cages 3 in a row 2 of cages, the operator is sitting in the seat 10 of the feed wagon 1. The operator steers the feed wagon with one hand, in the present case the hand of the left arm, and manipulates the spouts connected to the extendable arm part 20.2 of the third telescopic arm 20 by holding the spouts in the other hand, in the present case the hand of the right arm. The operator activates the feed sequence e.g. by depressing a first foot pedal and controls the speed of the vehicle by means of e.g. a second foot pedal. As long as the operator depresses the first foot pedal, the feed sequence is carried out in accordance with the stored data. When the foot pedal is released, the feed sequence is interrupted. When the pedal is depressed again, the feed sequence is resumed. During the movement of the feed wagon along the row of cages 3, the operator positions the outlet openings 16.1;16.2 of the spouts 15.1; 15.2 close to the top wall 4 of two adjacent cages 3 and feed products from the respective pumps 13.1;13.2 are pumped through the respective tubes 14.1;14.2 and spouts 15.1;15.2 and out through the respective outlet openings 16.1;16.2. During a pause period, the operator moves the spouts to the next two cages. The operator can be informed of the start of the pause period by means of a visible, audible or tactile signal from the control unit. When the next two cages in the row are reached by the moving feed vehicle, the above procedure is repeated and so on until the last cage in the row has been provided with a feed portion.

As an alternative to simultaneously delivering a feed portion to the top wall 4 of two adjacent cages 3 of a row, a feed portion can simultaneously be delivered to both the top wall of the nest box and the main box of a single cage through the spaced outlet openings 16.1;16.2 of the spouts 15.1,15.2.

In the latter case, the outlet openings of the spouts are mutually spaced laterally to be able to deliver a feed portion to the top wall of the nest box and to the top wall of the main box of a cage. Furthermore, during operation of the feed discharge device, the outlet opening of the spout arranged for delivering the feed portion to the roof of the main box is at a higher level than the outlet opening of the spout arranged for delivering the feed portion to the roof of the nest box, as the latter roof is normally arranged at a lower level than the roof of the main box. The spacing between the two outlet openings advantageously corresponds to the difference between the levels of the two mentioned roofs.

In the above described embodiment, the operator both steers the feed vehicle and controls the speed of the feed vehicle. However, the control unit could also steer the vehicle along the row of cages and/or also the speed of the vehicle, whereby the task of the operator would be moving and positioning the outlet of the spouts above the top wall of two adjacent cages in accordance with the control unit's controlled preselected speed of the feed wagon.

As an alternative to the above embodiment of the feed vehicle, the feed vehicle can be an unmanned, i.e. an automatic feed vehicle, automatically moved along the rows of cages and from one row to another according to a preselected computer program. Additionally, the movement of the spouts and the positioning thereof above the top wall of two adjacent cages and the delivering of feed portions of different sizes are also carried out automatically in accordance with a preselected program stored in the control unit. Correspondingly, movement of the spouts and positioning thereof above the top wall of the nest box and the main box of the cage and the delivering of different feed portions to the said top walls can also be carried out automatically.

Finally, it should be noted that especially in the case of an automatic feed vehicle, it is possible to provide the feed vehicle with an additional feed discharge device essentially corresponding to the above described first and second feed discharge devices but arranged and configured to deliver feed portions to the top wall of two adjacent cages or both the top wall of the nest box and the main box of each cage in an additional or second row of cages arranged spaced from and parallel with the above first row of cages. The automatic feed vehicle is moved in an aisle between the two rows of cages and feed portions are simultaneously discharged to the top wall of two adjacent cages or the top wall of both the nest box and the main box of a cage in each row.

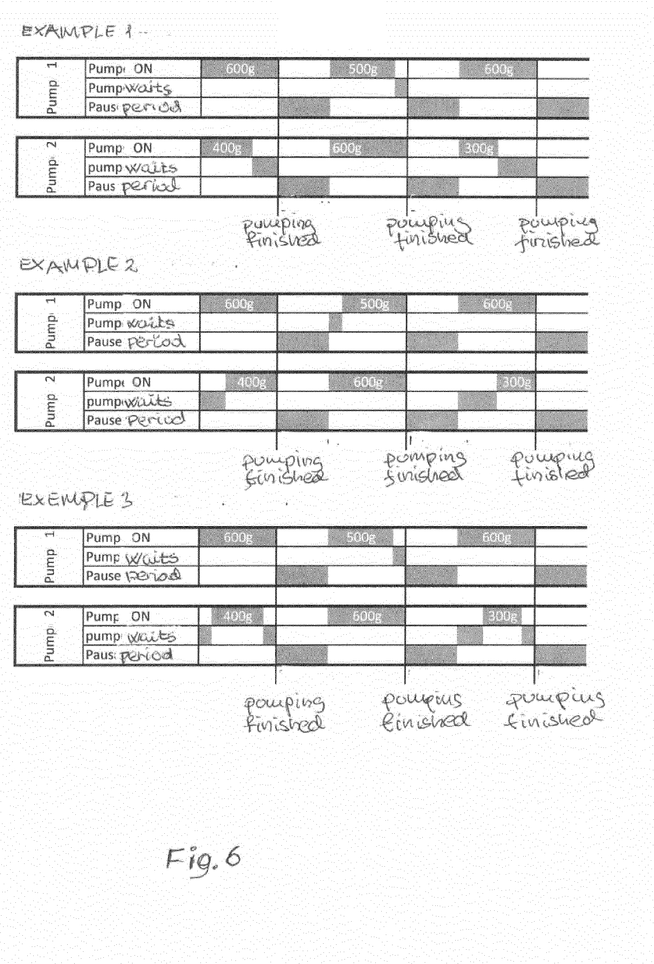

Referring now additionally to Fig. 6, modes of operating and controlling the operation of the pumps of the feed discharge devices are described.

Initially, it should be mentioned that it is preferred that the pumps 13.1, 13.2 of the discharge devices 12.1, 12.2 are rotary positive displacement pumps and that a detection means is associated with each pump, the detection means detecting the operating state of the respective pump, i.e. whether the pump is running or not. At present, the preferred pump is a gear pump and the preferred detection means a shaft encoder.

A gear pump allows for delivering a very accurate dose dependent on the number of rotations or extent of rotation of the shaft thereof, i.e. the rotation of the gear wheel(s). In other words, the delivered amount of feed product is determined by the number of teeth meshed during the operation of the gear pump.

A shaft encoder is that it allows for a very accurate control and detection of the number of rotations or extent of rotation of a shaft, such as a pump shaft.

Thus, by associating a shaft encoder with each pump, it is possible to operate each pump so that the desired size of dose is delivered and to detect when the pumps are running and thereby determine the start of the pause periods where none of the pumps are running. The above detections and desired data including the length of the pause periods are stored in or registered by the control unit whereby the control unit is able to provide the desired feeding sequence.

Reference is now made to Fig.6 illustrating different ways of operating two dosing pumps, pump 1 and pump 2, delivering predetermined sizes of feed product to two adjacent cages in a row of cages. The terms used are as follows:
Pump 1: the pump of the first feed discharge device
Pump 2: the pump of the second feed discharge device
Pump ON: the pump is running and delivers to the cage a dose of the size indicated during the dark coloured period
Pump waits: the pump in question is not running in the dark coloured period
Pause period: None of the pumps are running in the dark coloured periods and the spouts of the respective feed discharge devices can be moved to the next cages. Pumping finished: both pumps have finished pumping and delivered the predetermined feed dose to the cage in question.
Example 1: pump 1 and pump 2 start pumping and delivering feed at the same point of time after a pause period and stop pumping when the predetermined dose has been delivered. The pause starts when both pumps have finished pumping and none of the pumps are pumping during the pause.
Example 2: pump 1 and pump 2 start pumping at a point of time selected so that they will stop pumping at the same point of time. Again, the pause starts when both pumps have finished pumping and none of the pumps are pumping during the pause.
Example 3: discloses a situation where pump 1 and pump 2 neither start nor stop pumping at the same point of time. Again, the pause starts when both pumps have finished pumping and none of the pumps are pumping during the pause period having the preselected length.

Although the feed vehicle has been described in details by reference to a feed vehicle comprising two feed discharge devices delivering feed portions to two adjacent cages in a single row of cages, it is to be understood that the feed vehicle can comprise more than two feed discharge devices configured to deliver food portions to more than two cages in a single row of cages and to deliver food portions to cages in two parallel rows of cages.

### List of reference numerals

- 1: feed vehicle
- 2: row
- 3: cage
- 4: top wall
- 5: frame
- 5.1: front frame
- 5.2: rear frame
- 5.3: pivot point
- 6.6: pair of wheels
- 7.7: pair of front wheels
- 8: container
- 9: operator compartment
- 10: seat
- 11: steering wheel
- 12.1: first feed discharge device
- 12.2: second feed discharge device
- 13.1: first pump
- 13.2: second pump
- 14.1: first tubing
- 14.2: second tubing
- 15.1: first spout
- 15.2: second spout
- 16.1: first outlet opening
- 16.2: second outlet opening
- 17: system of arms (arm system)
- 18: first telescopic arm
- 18.1: stationary arm part
- 18.2: extendable arm part
- 19: second telescopic arm
- 19.1: stationary arm part
- 19.2: extendable arm part
- 20: third telescopic arm
- 20.1: stationary arm part
- 20.2: extendable arm part
- 21: feed portion
- 22: nest box
- 23: top wall or roof of nest box
- L: longitudinal axis

## Claims

1. A motorized feed vehicle for feeding fur animals, especially minks, raised in cages having wire mesh top walls and being arranged in longitudinal rows in farms, said vehicle having a longitudinal axis and comprising a frame supported by wheels and carrying a feed container with at least one inner space for storing feed, especially pasty mink feed, and at least two feed discharge devices for discharging feed on preferably a wire mesh top wall of cages and a control unit comprising a database for storing data about the amount of feed to be delivered to each cage in a delivering period and for controlling the amount of feed each of the feed discharge devices is to deliver to the cages in accordance with the stored data, each feed discharge device comprising a dosing pump being upstream connected to an inner space of the feed container and downstream connected to an upstream/proximal end of a tubing being at a distal end thereof provided with a spout having an outlet opening, each of the pumps being individually controllable to pump and deliver a predetermined amount of feed to each of the cages through the respective spout outlet openings.

2. A vehicle according to claim 1, wherein data about a pause/non-delivering period between delivering periods is stored in the database of the control unit in said pause none of the pumps are running and no feed delivered through the spout outlet openings, and each of the pumps are individually controllable to provide the pause/non-delivering and non-pumping periods between delivering feed to respective cages or sections of a single cage.

3. A vehicle according to claim 1 or 2, wherein detection means are associated with each pump, said detection means being configured to provide the control unit with information of whether or not the pump is running.

4. A vehicle according to claim 2 or 3, wherein the start of a pause is defined as being when the control unit from each detection means has received the information that the respective pump is no longer running.

5. A vehicle according to any of the preceding claims, wherein the dosing pumps of the feed discharge devices are positive displacement pumps, especially rotary positive displacement pumps, such as hose pumps or gear pumps, especially gear pumps.

6. A vehicle according to any of the preceding claims, wherein the detection means is a rotary encoder, also called a shaft encoder associated with a shaft of the respective pump.

7. A vehicle according to any of the preceding claims, wherein the control unit is configured to control at least one of the pumps to deliver preselected different amounts of feed to the cages.

8. A vehicle according to any of the preceding claims, wherein the tubing of a first discharge device is configured movably to arrange the spout opening at positions spaced outwardly from a first lateral side of the vehicle in order to deliver through the spout opening feed portions to cages arranged in a first longitudinally extending row of cages arranged on a first lateral side of the vehicle and the tubing of a second discharge device is configured moveably to arrange the spout opening at positions spaced outwardly from a second lateral side of the vehicle opposite said first lateral side of the vehicle in order to deliver through the spout opening feed portions to cages arranged in a second longitudinally extending row of cages arranged on a second lateral side of the vehicle opposite said first side.

9. A vehicle according to any of the preceding claims 1-7, wherein the tubing of both the first and second feed discharge device is configured movably to arrange the spout opening of the respective spouts at positions spaced outwardly from a first lateral side of the vehicle in order to deliver, through the first and second spout opening respectively, feed portions to two longitudinally adjacent cages in a single row of cages or to two cage sections or points of a single cage in a single row of cages.

10. A vehicle according to any of the preceding claims, wherein the tubing of at least one feed discharge device, preferable the tubing of at least two feed discharge devices, is connected to a robot arm allowing the spout and the opening thereof to be moved to positions where a feed portion is to be delivered, the movement of the robot arm being controlled by the control unit in accordance with data stored in the database thereof.

11. A vehicle according to any of the preceding claims, wherein the vehicle is a manned vehicle to be manned with an operator manually handling the tubing and the spout of at least one of the feed discharge devices, preferably two feed discharge devices, and optionally also controlling the speed of the vehicle.

12. An arrangement comprising a fur animal farm, especially a mink farm, with at least two parallel rows of cages separated by a driving isle and a motorized feed vehicle according to any of the preceding claims being configured to drive on the aisle along the rows of cages.

13. A method of feeding - by means of a feed vehicle according to any of the preceding claims 1 to11- fur animals, especially minks, raised in cages having a wire mesh top wall and being arranged in at least one longitudinal row in a farm, the method comprising:
- moving the feed vehicle along the at least one longitudinal row of cages
- essentially simultaneously discharging a feed portion through the spout outlet opening of a first feed discharge device to a spot of a top wall of a first cage and discharging a feed portion through the spout outlet opening of a second feed discharge device to a spot of a top wall of a second cage or a top wall of a nest box of the first cage until at least one feed portion has been discharged to the desired cages of the row of cages.

14. A method according to claim 13, wherein the feed vehicle is a vehicle to be manned with an operator wherein
- the operator handles the spouts of a first and second feed discharge device by holding the spouts by one arm and moving them to position the outlet openings thereof close to the spots of the top wall or top walls where the feed portions are to be delivered, and
- the operator controls the speed of the vehicle and the pumps of the feed discharge devices are automatically activated by the control unit to deliver through the spout outlet openings thereof feed portions to the cages in accordance with the data stored in the database of the control unit.

15. The use of a feed vehicle according to any of the preceding claims 1-11 to feed fur animals, especially minks, raised in cages arranged in longitudinal rows.
